# DEMANDE DE BREVET EUROPEEN

(11) **EP 1 608 096 A1**
(43) Date de publication de la demande: **21.12.2005**
(21) Numéro de dépôt: 05103347.0
(22) Date de dépôt: 25.04.2005
(51) Int. Cl.: H04J 14/02

(54) **procédé d'extension d'un réseau de transmission optique, réseau de transmission optique et noeuds de transmission optique associés**

(30) Priorité: 14.06.2004 FR 0451168
(71) Demandeur: ALCATEL, 75008 Paris (FR)
(72) Inventeur: Pain, Franck, 91240, Saint Michel Sur Orge (FR); Faure, Jean-Paul, 75014, Paris (FR)
(74) Mandataire: Vigand, Régis Louis Michel

(57) **Abrégé**

L'invention concerne le domaine des procédés d'extension de réseau de transmission optique, des réseaux de transmission optique extensibles et les noeuds de transmission optique extensibles.

Le noeud extensible selon l'invention est un noeud extensible de transmission optique, comportant : plusieurs lignes de transmission à fibre optique ; plusieurs diviseurs optiques (2), un diviseur optique présentant une ligne de transmission à fibre optique en entrée (20) et plusieurs lignes de transmission à fibre optique en sortie (21 à 24) ; plusieurs combineurs optiques (3), un combineur optique présentant plusieurs lignes de transmission à fibre optique en entrée (31 à 34) et une ligne de transmission à fibre optique en sortie (30) ; au moins l'une des lignes de transmission à fibre optique en sortie (23, 24) d'au moins l'un des diviseurs optiques, présentant une extrémité libre; - au moins l'une des lignes de transmission à fibre optique en entrée (33, 34) d'au moins l'un des combineurs optiques, présentant une extrémité libre.

## Description

L'invention concerne le domaine des procédés d'extension (correspondant au terme « upgrade » en langue anglo-saxonne et non pas au terme « reconfigurable ») de réseau de transmission optique, des réseaux de transmission optique extensibles associés destinés à être étendus par le procédé d'extension, des noeuds de transmission optique extensibles destinés à être étendus par le procédé d'extension, des noeuds de transmission optique étendus ayant été étendus par le procédé d'extension.

Selon un art antérieur, il est connu un réseau de transmission optique extensible comprenant des noeuds de transmission optique de degré 2 basés sur l'utilisation de diviseurs optiques constitués de coupleurs 1 vers 2 et de combineurs optiques constitués de coupleurs 2 vers 1, ainsi que sur l'utilisation de bloqueurs en longueur d'onde, qui sont ensuite étendus pour devenir des noeuds de degré supérieur par mise en cascade de coupleurs 1 vers 2 et de coupleurs 2 vers 1 respectivement dans les diviseurs optiques et dans les combineurs optiques. Des exemples de ce type d'art antérieur sont notamment décrits dans la demande de brevet américain US2003/002104. D'autres types de noeuds utilisant des diviseurs optiques à base de coupleurs 1 vers 2 et des combineurs optiques à base de coupleurs 2 vers 1 sont décrits dans la demande de brevet européen EP 1298467 et dans la demande de brevet européen EP 1271827. Un autre type de noeud utilisant des diviseurs optiques à base de coupleurs 1 vers 3 est décrit dans la demande de brevet internationale WO99/65165. Aucun de ces exemples de noeuds de transmission optique ne peut être étendu, par exemple avec un degré plus élevé, sans interruption de trafic.

L'invention propose la mise en place d'un noeud de transmission optique extensible présentant pour au moins l'un de ses diviseurs optiques une ligne de transmission optique en sortie du diviseur optique qui présente une extrémité libre et pour au moins l'un de ses combineurs optiques une ligne de transmission optique en entrée du combineur optique qui présente une extrémité libre. Ainsi, le noeud de transmission optique peut être étendu en un noeud de transmission optique par exemple de degré supérieur sans interruption de trafic, en reliant simplement les extrémités libres non encore reliées des lignes de transmission optiques disponibles à la nouvelle direction qui est rajoutée au noeud ; relier des extrémités libres déjà disponibles peut se faire sans interruption de trafic. Les diviseurs optiques ayant plus de lignes de transmission optique en sortie que dans l'art antérieur, au moins une de plus, leurs pertes sont plus élevées : il y a donc un supplément de pertes par rapport à l'art antérieur lors du fonctionnement avant extension. L'invention concerne également le réseau de transmission optique extensible intégrant un ou plusieurs noeuds extensibles selon l'invention, ainsi que le procédé d'extension et le noeud étendu obtenu.

Relier à une entité signifie mettre en place un lien avec l'entité de manière à permettre le transfert de l'information à partir de et ou vers cette entité, que ce soit de manière directe ou de manière indirecte c'est-à-dire par l'intermédiaire d'une ou plusieurs lignes de transmission optique et ou d'un ou de plusieurs composants tels que par exemple un amplificateur. Raccordement sera utilisé dans le même sens. Etre relié en amont à une entité signifie avoir un lien avec l'entité de manière à permettre le transfert de l'information à partir de cette entité, que ce soit de manière directe ou de manière indirecte c'est-à-dire par l'intermédiaire d'une ou plusieurs lignes de transmission optique et ou d'un ou de plusieurs composants tels que par exemple un amplificateur. Etre relié en aval à une entité signifie avoir un lien avec l'entité de manière à permettre le transfert de l'information vers cette entité, que ce soit de manière directe ou de manière indirecte c'est-à-dire par l'intermédiaire d'une ou plusieurs lignes de transmission optique et ou d'un ou de plusieurs composants tels que par exemple un amplificateur.

Selon l'invention, il est prévu un procédé d'extension d'un réseau extensible de transmission optique en multiplexage en longueur d'onde, lequel réseau comprenant : plusieurs directions de transmission ; au moins un noeud extensible de transmission optique reliant entre elles au moins certaines desdites directions de transmission, et comportant : plusieurs lignes de transmission à fibre optique ; plusieurs diviseurs optiques, un diviseur optique présentant une ligne de transmission à fibre optique en entrée et plusieurs lignes de transmission à fibre optique en sortie ; plusieurs combineurs optiques, un combineur optique présentant plusieurs lignes de transmission à fibre optique en entrée et une ligne de transmission à fibre optique en sortie ; au moins l'une des lignes de transmission à fibre optique en sortie d'au moins l'un des diviseurs optiques, présentant une extrémité n'étant reliée en aval ni à une direction de transmission, ni à un éventuel dispositif d'extraction ; au moins l'une des lignes de transmission à fibre optique en entrée d'au moins l'un des combineurs optiques, présentant une extrémité n'étant reliée en amont ni à une direction de transmission, ni à un éventuel dispositif d'insertion ; le procédé d'extension comprenant au moins une étape de raccordement, au niveau dudit noeud ou au moins de l'un desdits noeuds, d'au moins une ligne de transmission à fibre optique en sortie non reliée en aval et d'au moins une ligne de transmission à fibre optique en entrée non reliée en amont, soit à une nouvelle direction de transmission non encore reliée audit noeud, soit respectivement à un éventuel dispositif d'extraction et à un éventuel dispositif d'insertion, non encore reliés audit noeud.

Le procédé d'extension a pour fonction d'étendre un réseau de transmission optique qui est extensible, c'est-à-dire qui a été prévu pour pouvoir être étendu par le procédé d'extension. Plus précisément, le procédé d'extension a pour fonction d'étendre un ou avantageusement plusieurs noeuds de transmission optique appartenant au réseau de transmission optique, et éventuellement tous les noeuds de transmission optique du réseau de transmission optique. Les noeuds de transmission optique sont extensibles, c'est-à-dire qu'ils ont été prévus pour pouvoir être étendus par le procédé d'extension.

Un noeud de transmission optique relie entre elles plusieurs directions de transmission et permet à tout ou partie des directions de transmission, de préférence à toutes les directions, d'échanger de manière soit unidirectionnelle soit préférentiellement de manière bidirectionnelle, des informations avec tout ou partie des autres directions de transmission, de préférence avec toutes les autres directions de transmission.

Le noeud de transmission optique, pour véhiculer l'information, comprend des lignes de transmission optiques, c'est-à-dire des lignes à base de fibre optique, comprenant une ou plusieurs fibres optiques, câblées ou non, éventuellement disposées à l'intérieur d'un ou de plusieurs câbles à fibre optique lorsqu'elles sont câblées.

Pour permettre au noeud de transmission optique d'aiguiller correctement l'information, le noeud de transmission comporte plusieurs diviseurs optiques ainsi que plusieurs combineurs optiques. Un diviseur optique sépare ou distribue l'information, il comprend donc une seule entrée et plusieurs sorties. Un combineur optique rassemble l'information, il comprend donc plusieurs entrées et une seule sortie.

Pour pouvoir faire évoluer le noeud de transmission optique vers une complexité accrue, sans interrompre le trafic d'information, au moins un diviseur optique présente une sortie libre, c'est-à-dire non encore reliée en aval à une direction de transmission ou à un dispositif d'extraction, c'est-à-dire en l'air, c'est-à-dire inutilisée et inutilisable sans modification qui consiste justement à la relier soit à une direction de transmission soit à un dispositif d'extraction, opération de raccordement qui est effectuée pendant l'étape de raccordement du procédé d'extension. La sortie libre est une sortie inutilisée qui est déjà prévue d'avance pour pouvoir être reliée simplement sans interruption de trafic L'inconvénient est de présenter des pertes plus élevées au départ, inconvénient que l'invention estime compensé par la possibilité d'une évolution simple, rapide et surtout sans interruption de trafic.

Pour pouvoir faire évoluer le noeud de transmission optique vers une complexité accrue, sans interrompre le trafic d'information, de façon semblable, au moins un combineur optique présente une entrée libre, c'est-à-dire non encore reliée en amont à une direction de transmission ou à un dispositif d'insertion, c'est-à-dire en l'air, c'est-à-dire inutilisée et inutilisable sans modification qui consiste justement à la relier soit à une direction de transmission soit à un dispositif d'insertion, opération de raccordement qui est effectuée pendant l'étape de raccordement du procédé d'extension. L'entrée libre est une entrée inutilisée qui est déjà prévue d'avance pour pouvoir être reliée simplement sans interruption de trafic. Ici aussi, l'inconvénient est de présenter des pertes plus élevées au départ, inconvénient que l'invention estime compensé par la possibilité d'une évolution simple, rapide et surtout sans interruption de trafic.

Le type d'évolution auquel vont être soumis le ou les noeuds de transmission optique est de préférence de deux sortes préférentielles, soit le degré du noeud va augmenter, par exemple un noeud de degré 2 va devenir un noeud de degré 3 ou un noeud de degré 3 va devenir un noeud de degré 4 ou encore un noeud de degré 2 va devenir directement un noeud de degré 4, soit un système d'insertion et d'extraction, comprenant un dispositif d'extraction et un dispositif d'insertion, va être ajouté au niveau du noeud de transmission optique.

Dans le premier type d'évolution, est ajoutée une nouvelle direction de transmission non encore reliée audit noeud, à laquelle vont être reliées au moins une ligne de transmission à fibre optique en sortie non reliée en aval et au moins une ligne de transmission à fibre optique en entrée non reliée en amont, de façon à étendre au moins un noeud de degré N, avec N entier supérieur ou égal à 2, en un noeud de degré N + P, avec P entier supérieur ou égal à 1. Le degré du noeud de transmission optique augmente au moins d'une unité. Le degré du noeud correspond au nombre de directions de transmission qui sont reliées au noeud. Les directions de transmission peuvent être reliées de manière unidirectionnelle ou bidirectionnelle, à une ou plusieurs autres directions de transmission elles-mêmes reliées au noeud, de préférence toutes les directions de transmission sont reliées de manière bidirectionnelle à toutes les autres directions de transmission reliées au noeud. De préférence, N vaut 2 ou 3. De préférence, P vaut 1 ou 2. Par exemple, un noeud de degré 2 ou 3 verra son degré augmenter à 3 ou 4. Lors de l'augmentation du degré du noeud, en plus d'un procédé d'extension simple pouvant être effectué sans interruption de trafic, les pertes du noeud étendu sont moins importantes que dans le cas d'une extension classique par mise en cascade de plusieurs diviseurs 1 vers 2 et de plusieurs combineurs 2 vers 1. Toutefois, les pertes au départ dans le noeud extensible sont plus importantes : c'est pourquoi, de préférence, le diviseur optique destiné à être étendu est au plus 1 vers 4, avec deux sorties libres au plus, et le combineur optique destiné à être étendu est au plus 4 vers 1, avec deux entrées libres au plus. Dans un exemple à titre d'illustration, pour faire évoluer un noeud du degré 2 au degré 3, tandis que les pertes passent par exemple de 12dB, correspondant à une séquence comprenant un coupleur 1vers 2 suivi d'un bloqueur en longueur d'onde suivi d'un coupleur 2 vers 1, à 24dB, correspondant à deux séquences du type précédent en série, dans le cas de l'invention, elles valent par exemple 16dB, correspondant à un coupleur 1vers 3 suivi d'un bloqueur en longueur d'onde suivi d'un coupleur 3 vers 1.

Dans le deuxième type d'évolution, sont ajoutés au moins un dispositif d'extraction et au moins un dispositif d'insertion, auxquels sont respectivement reliées, au moins une ligne de transmission à fibre optique en sortie non reliée en aval et au moins une ligne de transmission à fibre optique en entrée non reliée en amont. Les lignes de transmission libres sont utilisées pour ajouter une possibilité d'extraction et d'insertion au niveau du noeud au lieu d'être utilisées pour augmenter le degré du noeud.

L'invention concerne également un réseau extensible prévu pour pouvoir être étendu par le procédé d'extension selon l'invention. Selon l'invention, il est aussi prévu un réseau extensible de transmission optique en multiplexage en longueur d'onde, comprenant : plusieurs directions de transmission ; au moins un noeud extensible de transmission optique reliant entre elles au moins certaines desdites directions de transmission, et comportant : plusieurs lignes de transmission à fibre optique ; plusieurs diviseurs optiques, un diviseur optique présentant une ligne de transmission à fibre optique en entrée et plusieurs lignes de transmission à fibre optique en sortie ; plusieurs combineurs optiques, un combineur optique présentant plusieurs lignes de transmission à fibre optique en entrée et une ligne de transmission à fibre optique en sortie ; caractérisé en ce que ledit noeud ou au moins l'un desdits noeuds comprend aussi : au moins l'une des lignes de transmission à fibre optique en sortie d'au moins l'un des diviseurs optiques, qui présente une extrémité qui n'est reliée en aval ni à une direction de transmission, ni à un éventuel dispositif d'extraction ; au moins l'une des lignes de transmission à fibre optique en entrée d'au moins l'un des combineurs optiques, qui présente une extrémité qui n'est reliée en amont ni à une direction de transmission, ni à un éventuel dispositif d'insertion.

L'invention concerne également un noeud extensible appartenant au réseau extensible prévu pour pouvoir être étendu par le procédé d'extension selon l'invention. Selon l'invention, il est également prévu un noeud extensible de transmission optique, comportant : plusieurs lignes de transmission à fibre optique ; plusieurs diviseurs optiques, un diviseur optique présentant une ligne de transmission à fibre optique en entrée et plusieurs lignes de transmission à fibre optique en sortie ; plusieurs combineurs optiques, un combineur optique présentant plusieurs lignes de transmission à fibre optique en entrée et une ligne de transmission à fibre optique en sortie ; caractérisé en ce que : au moins l'une des lignes de transmission à fibre optique en sortie d'au moins l'un des diviseurs optiques, présente une extrémité libre ; au moins l'une des lignes de transmission à fibre optique en entrée d'au moins l'un des combineurs optiques, présente une extrémité libre.

De préférence, le noeud extensible est de degré 2 ou 3, de manière à limiter le supplément initial de pertes, lors du fonctionnement du noeud avant extension.

Tous les noeuds extensibles sont destinés à fonctionner avant leur extension. Le procédé d'extension est un procédé d'extension des noeuds après fonctionnement et non pas une simple étape d'un procédé d'installation d'un noeud non extensible, sans interruption de trafic, après fonctionnement.

De préférence, le noeud présente : plusieurs lignes de transmission à fibre optique en sortie d'au moins l'un des diviseurs optiques, présentant une extrémité libre ; plusieurs lignes de transmission à fibre optique en entrée d'au moins l'un des combineurs optiques, présentant une extrémité libre. Par conséquent, le noeud peut subir au moins deux évolutions sans interruption de trafic

De préférence, le noeud présente : plusieurs diviseurs optiques présentant au moins une ligne de transmission à fibre optique en sortie présentant une extrémité libre ; plusieurs combineurs optiques présentant au moins une ligne de transmission à fibre optique en entrée présentant une extrémité libre. Ainsi, plusieurs directions de transmission peuvent bénéficier de l'évolution du noeud.

De préférence, tous les diviseurs optiques présentent au moins une ligne de transmission à fibre optique en sortie présentant une extrémité libre et tous les combineurs optiques présentent au moins une ligne de transmission à fibre optique en entrée présentant une extrémité libre. Ainsi, toutes les directions de transmission peuvent bénéficier de l'évolution du noeud.

Dans un mode de réalisation, le noeud est un brasseur optique. Ainsi, l'évolution peut permettre de le transformer en multiplexeur optique à insertion et à extraction et ou d'augmenter son degré.

Dans un autre mode de réalisation préférentiel, le noeud est un multiplexeur optique à insertion et à extraction (OADM pour « optical add drop multiplexer » en anglais) comprenant au moins un dispositif d'insertion et au moins un dispositif d'extraction. Ce multiplexeur optique à insertion et à extraction est extensible. Ainsi, l'évolution peut permettre de lui ajouter une autre fonctionnalité d'extraction et d'insertion, et ou d'augmenter son degré.

De préférence, au moins l'un des diviseurs optiques du noeud est un commutateur en longueur d'onde (c'est-à-dire « wavelength switch » en anglais). Avantageusement plusieurs diviseurs optiques du noeud et ou du réseau sont des commutateurs en longueur d'onde. Encore plus avantageusement, tous les diviseurs optiques du noeud et ou du réseau sont des commutateurs en longueur d'onde.

De préférence, au moins l'un des diviseurs optiques du noeud est un coupleur et au moins l'une des lignes de transmission à fibre optique en sortie dudit coupleur est reliée à un bloqueur en longueur d'onde (c'est-à-dire « wavelength blocker » en anglais). Avantageusement plusieurs diviseurs optiques du noeud et ou du réseau sont des coupleurs auxquels sont ajoutés des bloqueurs en longueur d'onde. Encore plus avantageusement, tous les diviseurs optiques du noeud et ou du réseau sont des coupleurs auxquels sont ajoutés des bloqueurs en longueur d'onde.

De préférence, au moins l'un des combineurs optiques du noeud est un commutateur en longueur d'onde. Avantageusement plusieurs combineurs optiques du noeud et ou du réseau sont des commutateurs en longueur d'onde. Encore plus avantageusement, tous les combineurs optiques du noeud et ou du réseau sont des commutateurs en longueur d'onde.

De préférence, au moins l'un des combineurs optiques du noeud est un coupleur et au moins l'une des lignes de transmission à fibre optique en entrée dudit coupleur est reliée à un bloqueur en longueur d'onde. Avantageusement plusieurs combineurs optiques du noeud et ou du réseau sont des coupleurs auxquels sont ajoutés des bloqueurs en longueur d'onde. Encore plus avantageusement, tous les combineurs optiques du noeud et ou du réseau sont des coupleurs auxquels sont ajoutés des bloqueurs en longueur d'onde.

Le commutateur en longueur d'onde ainsi que le bloqueur en longueur d'onde sont reconfigurables, c'est-à-dire que leur sélectivité en longueur d'onde peut être modifiée.

De manière avantageuse, en amont de chaque diviseur optique est situé un amplificateur et en aval de chaque combineur optique est situé un amplificateur. Ces amplificateurs sont par exemple des amplificateurs à double étage (symbolisé sur les figures ultérieures par une double flèche, laquelle indique aussi le sens de transmission de l'information).

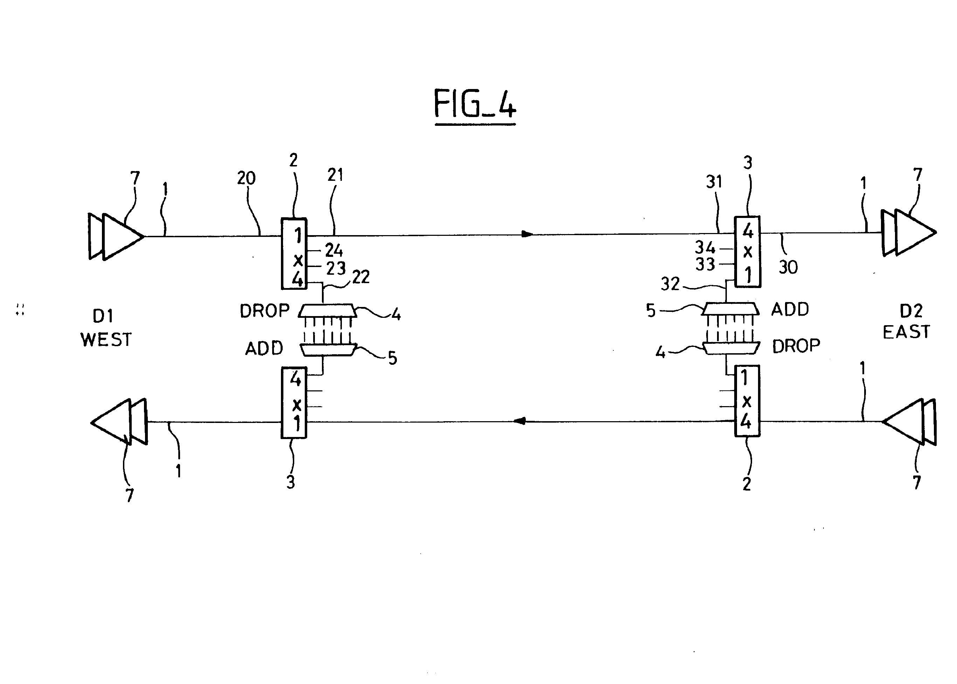

L'invention concerne également un exemple de noeud étendu appartenant au réseau étendu ayant été étendu par le procédé d'extension selon l'invention. Selon l'invention, il est également prévu un noeud de transmission optique étendu, de degré N avec N entier supérieur ou égal à 3, comportant : plusieurs lignes de transmission à fibre optique ; N diviseurs optiques, un diviseur optique étant un coupleur présentant une ligne de transmission à fibre optique en entrée et plusieurs lignes de transmission à fibre optique en sortie ; N combineurs optiques, un combineur optique étant un coupleur présentant plusieurs lignes de transmission à fibre optique en entrée et une ligne de transmission à fibre optique en sortie ; caractérisé en ce que le noeud comporte aussi : N.(N-1) bloqueurs en longueur d'onde, chaque bloqueur en longueur d'onde étant situé entre une ligne de transmission à fibre optique en sortie d'un diviseur optique et une ligne de transmission à fibre optique en entrée d'un combineur optique. Un tel exemple de noeud étendu avec N = 3 sera détaillé à la figure 4.

Selon un autre art antérieur, par exemple décrit dans les demandes de brevet européenne EP 1069720 et US 2004/131356, il est connu un réseau de transmission optique comprenant des noeuds de transmission optique basés sur l'utilisation de diviseurs optiques constitués de démultiplexeurs et d'autres éléments optiques passifs figés pour lesquels la capacité spectrale au niveau de chaque sortie est fixe à l'installation et ne peut plus être modifiée sans interruption du trafic dans le réseau et de combineurs optiques constitués de multiplexeurs et d'autres éléments optiques passifs non reconfigurables pour lesquels la capacité spectrale au niveau de chaque entrée est fixe à l'installation et ne peut plus être modifiée. Dans ce type de réseau, certains diviseurs ou combineurs optiques peuvent présenter des pattes libres pour permettre d'augmenter la capacité en rajoutant des longueurs d'onde.

Par contre, dans une réalisation préférentielle de type de réseau selon l'invention, utilisant des diviseurs et des combineurs optiques reconfigurables sans interruption de trafic, présentant sur leurs sorties et leurs entrées respectivement, une capacité spectrale, au niveau de chaque sortie ou de chaque entrée, qui est variable (on peut ajouter ou supprimer des longueurs d'onde à leur niveau) et qui peut être modifiée lors d'une reconfiguration (on peut rediriger les longueurs d'onde d'une patte à une autre patte), aucune patte libre n'est requise pour augmenter la capacité en rajoutant des longueurs d'onde ; toutefois, pour résoudre le problème spécifique de l'invention, inconnu dans cet art antérieur, à savoir rajouter de nouvelles directions à un ou plusieurs noeuds dans le réseau, l'invention dispose une ou plusieurs pattes libres, sur ces combineurs et diviseurs optiques, ce qui n'aurait pas été requis pour un simple problème de capacité. Ainsi, dans ce type de réseau selon une réalisation préférentielle de l'invention, les combineurs optiques ou au moins certains d'entre eux présentent des lignes de transmission à fibre optique en entrée à capacité spectrale variable et reconfigurable sans interruption de trafic et les diviseurs optiques ou au moins certains d'entre eux présentent des lignes de transmission à fibre optique en sortie à capacité spectrale variable et reconfigurable sans interruption de trafic. Des exemples types de tels diviseurs et combineurs optiques sont les commutateurs en longueur d'onde d'une part et les associations coupleur et bloqueur en longueur d'onde d'autre part. Chaque réalisation précédente de l'invention peut être associée à ce mode de réalisation préférentielle des combineurs et des diviseurs optiques.

L'invention sera mieux comprise et d'autres particularités et avantages apparaîtront à l'aide de la description ci-après et des dessins joints, donnés à titre d'exemples, où :
- la figure 1 représente schématiquement un noeud de transmission optique de degré 2 selon l'art antérieur ;
- la figure 2 représente schématiquement un exemple de noeud de transmission optique de degré 2 selon l'invention, extensible une fois par le procédé d'extension selon l'invention ;
- la figure 3 représente schématiquement un exemple de noeud de transmission optique de degré 3 selon l'invention, ayant été étendu par le procédé d'extension selon l'invention ;
- la figure 4 représente schématiquement un exemple de noeud de transmission optique de degré 2 selon l'invention, extensible deux fois par le procédé d'extension selon l'invention ;
- la figure 5 représente schématiquement un exemple de noeud de transmission optique de degré 3 selon l'invention, extensible une fois par le procédé d'extension selon l'invention ;
- la figure 6 représente schématiquement un exemple de noeud de transmission optique de degré 4, ayant été étendu par le procédé d'extension selon l'invention.

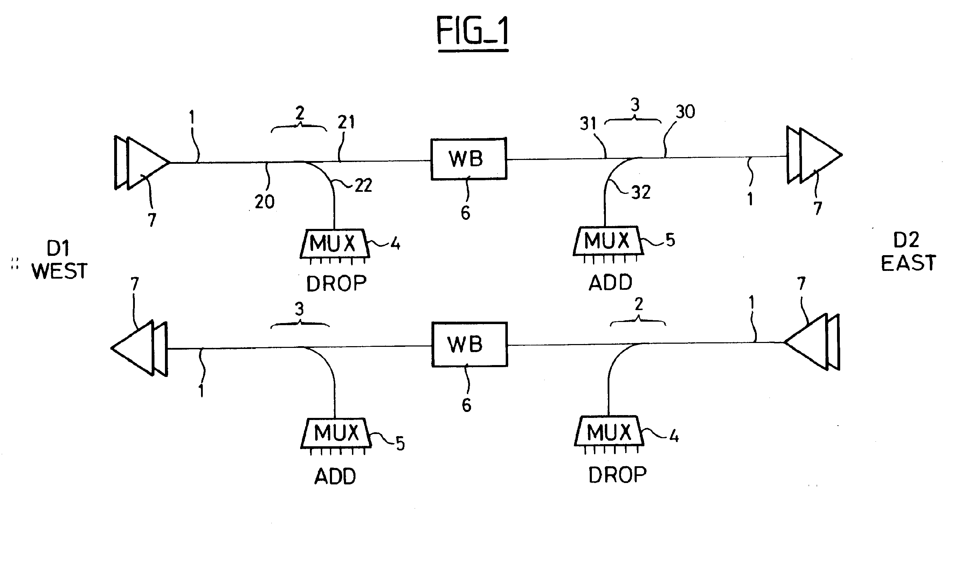

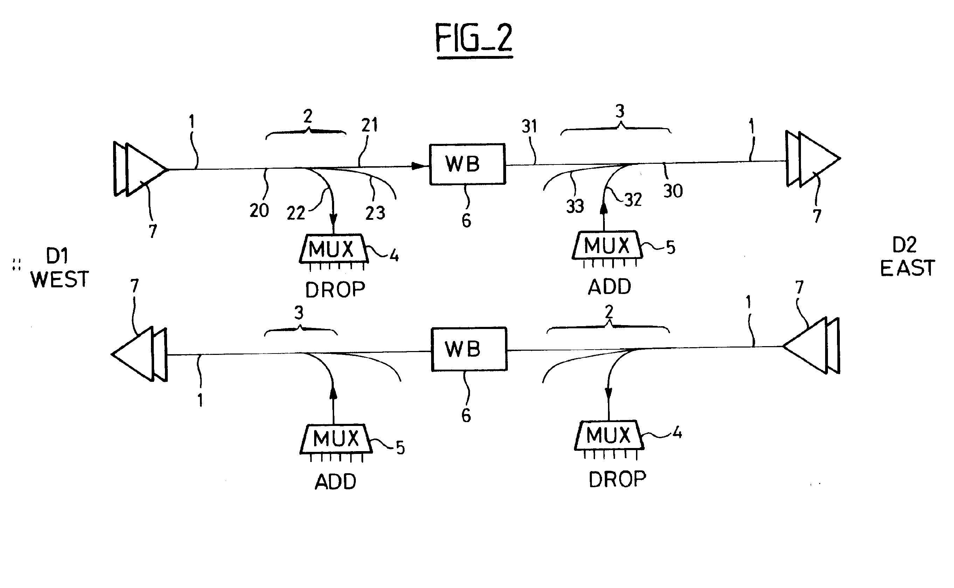

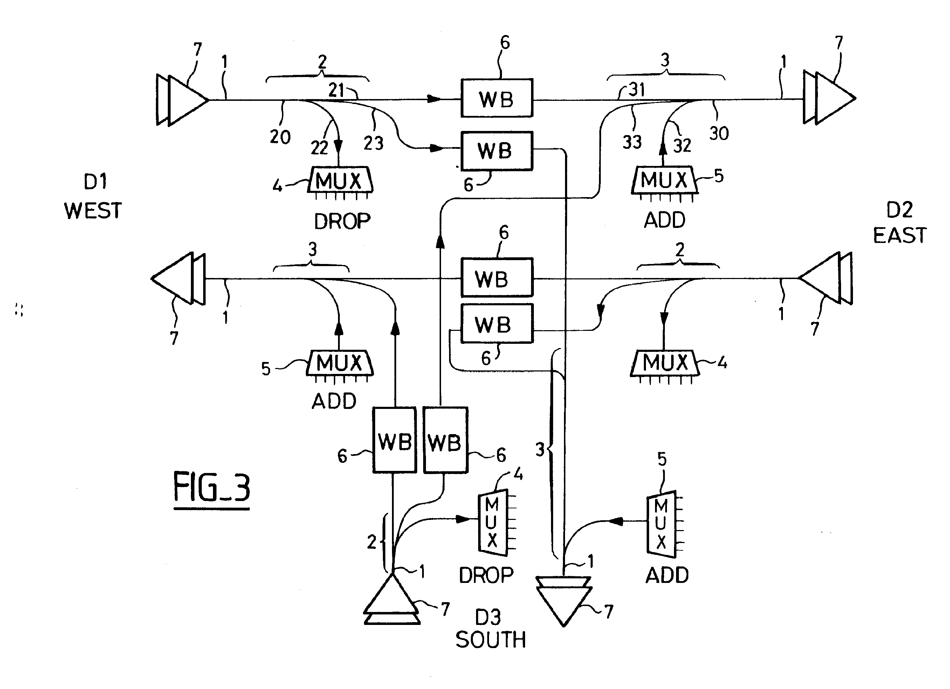

Voici quelques notations valables pour l'ensemble des figures 1 à 6. Le trait fin noté à certains endroits 1 représente une ligne de transmission optique. Toutes les entrées et sorties des diviseurs et combineurs optiques sont des lignes de transmission optique. Une flèche pleine sombre sur une ligne de transmission optique indique le sens de transmission de l'information, tout comme le sens de la flèche claire 7 qui est située en bout de ligne de transmission optique représentée sur les figures et qui symbolise un amplificateur. Le sens amont-aval est le sens de transmission de l'information. Au-delà des amplificateurs 7, qui sont optionnels et dont le caractère à double étage est également optionnel, sont notées les directions de transmission, au moins D1 intitulée « WEST » et D2 intitulée « EAST », et éventuellement D3 intitulée « SOUTH » et ou D4 intitulée « NORTH ». Le noeud représenté relie les directions représentées de manière bidirectionnelle. Chaque diviseur optique est noté 2, il comprend une entrée 20, une sortie 21, une sortie extraite 22 dirigée vers un dispositif d'extraction lequel est noté 4 et intitulé « MUX DROP », éventuellement une ou plusieurs autres sorties 23 et ou 24. Chaque combineur optique est noté 3, il comprend une sortie 30, une entrée 31, une entrée insérée 32 dirigée vers un dispositif d'insertion lequel est noté 5 et intitulé « MUX ADD », éventuellement une ou plusieurs autres entrées 33 et ou 34. Pour des raisons de clarté des figures, sur chaque figure, un seul diviseur optique 2 et un seul combineur optique 3 seront détaillés. Une extrémité libre est simplement représentée en l'air, c'est-à-dire n'est reliée à aucun autre élément sur les figures. Sur les figures 2 et 4, la ligne de transmission en sortie 23 présente une extrémité libre, l'autre étant reliée indirectement à la direction D1. Sur les figures 3, 5 et 6, la ligne de transmission en sortie 23 ne présente plus d'extrémité libre, puisque l'une de ses extrémités est reliée indirectement à la direction D1 tandis que l'autre est reliée à la direction D3. Chaque bloqueur en longueur d'onde est noté 6 et est intitulé « WB ». Le bloqueur en longueur d'onde extrait une partie des canaux spectraux qui le traversent, il « bloque » en effet certaines longueurs d'onde de manière à permettre leur réutilisation lors de l'insertion de nouveaux canaux spectraux en aval sans risque de collision.

Sur les figures 4 à 6, les diviseurs optiques sont notés 2 et intitulés « 1x4 » tandis que les combineurs optiques sont notés 3 et intitulés « 4x1 ». Trois modes de réalisation sont pratiquement envisagés. Dans un premier mode de réalisation, tous les diviseurs optiques 2 sont des coupleurs tandis que tous les combineurs optiques 3 sont des commutateurs en longueur d'onde. Dans un deuxième mode de réalisation, tous les diviseurs optiques 2 sont des commutateurs en longueur d'onde tandis que tous les combineurs optiques 3 sont des coupleurs. Dans un troisième mode de réalisation, tous les diviseurs optiques 2 et tous les combineurs optiques 3 sont des commutateurs en longueur d'onde.

Dans un diviseur optique, un coupleur sépare l'information reçue en entrée en plusieurs parties respectivement émises sur les sorties, chaque partie comprenant l'intégralité de l'information mais présentant une amplitude diminuée par rapport à l'information disponible en entrée. Dans un diviseur optique, un commutateur en longueur d'onde sépare spectralement l'information reçue en entrée en plusieurs parties correspondant à des sous-domaines spectralement différents respectivement émis sur les sorties, chaque partie ne comprenant qu'un sous-domaine spectral de l'information. Cette séparation spectrale n'est pas figée et peut éventuellement être reconfigurée.

Dans un combineur optique, un coupleur rassemble l'information reçue sur les différentes entrées pour l'émettre sur la sortie. Dans un combineur optique, un commutateur en longueur d'onde multiplexe en sortie les informations reçues sur ses entrées après les avoir spectralement filtrées.

La figure 1 représente schématiquement un noeud de transmission optique de degré 2 selon l'art antérieur. Le noeud est de degré 2, il relie deux directions D1 et D2 de manière bidirectionnelle entre elles. D'une direction de transmission à l'autre, l'information arrivant d'une direction de transmission, par exemple la direction D1, passe par un amplificateur 7, arrive sur une entrée 20 d'un diviseur optique 2, traverse le diviseur optique 2. De l'information est envoyée sur une sortie 22 du diviseur optique 2 puis est extraite par un dispositif d'extraction 4. De l'information est envoyée sur une sortie 21 du diviseur optique 2 puis traverse un bloqueur en longueur d'onde 6 puis arrive sur une entrée 31 d'un combineur optique 3. De l'information est insérée par un dispositif d'insertion 5 pour arriver sur une entrée 32 du combineur optique 3. Les informations reçues sur les entrées 31 et 32 du combineur optique 3 sont rassemblées sur la sortie 30 du combineur optique 3. L'information émise sur la sortie 30 du combineur optique 3 passe par un amplificateur 7 pour partir vers une autre direction de transmission, ici vers la direction D2.

La figure 2 représente schématiquement un exemple de noeud de transmission optique de degré 2 selon l'invention, extensible une fois par le procédé d'extension selon l'invention. Extensible une fois signifie que le degré, s'il s'agit d'augmenter le degré, peut être augmenté d'une unité, que cette évolution soit faite en une seule fois ou en plusieurs fois dans le temps. Le noeud est de degré 2, il relie deux directions D1 et D2 de manière bidirectionnelle entre elles. D'une direction de transmission à l'autre, l'information arrivant d'une direction de transmission, par exemple D1, passe par un amplificateur 7, arrive sur une entrée 20 d'un diviseur optique 2, traverse le diviseur optique 2. De l'information est envoyée sur une sortie 22 du diviseur optique 2 puis est extraite par un dispositif d'extraction 4. De l'information est envoyée sur une sortie 23 du diviseur optique 2 puis reste bloquée car la sortie 23 est libre en aval, c'est-à-dire non reliée en aval. De l'information est envoyée sur une sortie 21 du diviseur optique 2 puis traverse un bloqueur en longueur d'onde 6 puis arrive sur une entrée 31 d'un combineur optique 3. De l'information est insérée par un dispositif d'insertion 5 pour arriver sur une entrée 32 du combineur optique 3. Aucune information ne provient de l'entrée 33 du combineur optique laquelle entrée 33 est libre en amont, c'est-à-dire non reliée en amont. Les informations reçues sur les entrées 31, 32 et 33, mais il n'y a pas d'information sur l'entrée 33, du combineur optique 3 sont rassemblées sur la sortie 30 du combineur optique 3. L'information émise sur la sortie 30 du combineur optique 3 passe par un amplificateur 7 pour partir vers une autre direction de transmission, par exemple D2. Les diviseurs optiques 2 et les combineurs optiques 3 sont des coupleurs.

La figure 3 représente schématiquement un exemple de noeud de transmission optique de degré 3 selon l'invention, ayant été étendu par le procédé d'extension selon l'invention. Le noeud est de degré 3, il relie trois directions D1, D2 et D3 de manière bidirectionnelle entre elles. D'une direction de transmission à l'autre, l'information arrivant d'une direction de transmission, par exemple D1, passe par un amplificateur 7, arrive sur une entrée 20 d'un diviseur optique 2, traverse le diviseur optique 2. De l'information est envoyée sur une sortie 22 du diviseur optique 2 puis est extraite par un dispositif d'extraction 4. De l'information est envoyée sur une sortie 23 du diviseur optique 2 laquelle sortie 23 a été reliée à une autre direction de transmission, par exemple à la direction D3, par l'intermédiaire d'un bloqueur en longueur d'onde 6 et d'un combineur optique 3, lors de l'étape de raccordement du procédé d'extension. De l'information est envoyée sur une sortie 21 du diviseur optique 2 puis traverse un bloqueur en longueur d'onde 6 puis arrive sur une entrée 31 d'un combineur optique 3. De l'information est insérée par un dispositif d'insertion 5 pour arriver sur une entrée 32 du combineur optique 3. De l'information arrive sur l'entrée 33 du combineur optique 3, en provenance d'une autre direction de transmission, par exemple ici la direction D3, ladite entrée 33 ayant été reliée à la direction D3 par l'intermédiaire d'un bloqueur en longueur d'onde 6 et d'un diviseur optique 2, lors de l'étape de raccordement du procédé d'extension. Les informations reçues sur les entrées 31, 32 et 33 du combineur optique 3 sont rassemblées sur la sortie 30 du combineur optique 3. L'information émise sur la sortie 30 du combineur optique 3 passe par un amplificateur 7 pour partir vers une autre direction de transmission, par exemple ici la direction D2. Le noeud de degré 3 comporte trois diviseurs optiques 2, trois combineurs optiques 3, et six bloqueurs en longueur d'onde 6. Les diviseurs optiques 2 et les combineurs optiques 3 sont des coupleurs.

La figure 4 représente schématiquement un exemple de noeud de transmission optique de degré 2 selon l'invention, extensible deux fois par le procédé d'extension selon l'invention. Le noeud est de degré 2, il relie deux directions D1 et D2 de manière bidirectionnelle entre elles. D'une direction de transmission à l'autre, l'information arrivant d'une direction de transmission, par exemple la direction D1, passe par un amplificateur 7, arrive sur une entrée 20 d'un diviseur optique 2, traverse le diviseur optique 2. Tout ou partie de l'information, selon que le diviseur optique 2 est respectivement un coupleur ou un commutateur en longueur d'onde, est envoyée sur une sortie 22 du diviseur optique 2 puis est extraite par un dispositif d'extraction 4. Tout ou partie de l'information, selon que le diviseur optique 2 est respectivement un coupleur ou un commutateur en longueur d'onde, est envoyée sur une sortie 23 du diviseur optique 2 puis reste bloquée car la sortie 23 est libre en aval, c'est-à-dire non reliée en aval. Tout ou partie de l'information, selon que le diviseur optique 2 est respectivement un coupleur ou un commutateur en longueur d'onde, est envoyée sur une sortie 24 du diviseur optique 2 puis reste bloquée car la sortie 24 est libre en aval, c'est-à-dire non reliée en aval. Tout ou partie de l'information, selon que le diviseur optique 2 est respectivement un coupleur ou un commutateur en longueur d'onde, est envoyée sur une sortie 21 du diviseur optique 2 puis arrive sur une entrée 31 d'un combineur optique 3. De l'information est insérée par un dispositif d'insertion 5 pour arriver sur une entrée 32 du combineur optique 3. Aucune information ne provient de l'entrée 33 du combineur optique 3 laquelle entrée 33 est libre en amont, c'est-à-dire non reliée en amont. Aucune information ne provient de l'entrée 34 du combineur optique 3 laquelle entrée 34 est libre en amont, c'est-à-dire non reliée en amont. Les informations reçues sur les entrées 31, 32, 33 et 34, mais il n'y a pas d'information sur les entrées 33 et 34, du combineur optique 3 sont rassemblées sur la sortie 30 du combineur optique 3. L'information émise sur la sortie 30 du combineur optique 3 passe par un amplificateur 7 pour partir vers une autre direction de transmission, par exemple ici la direction D2.

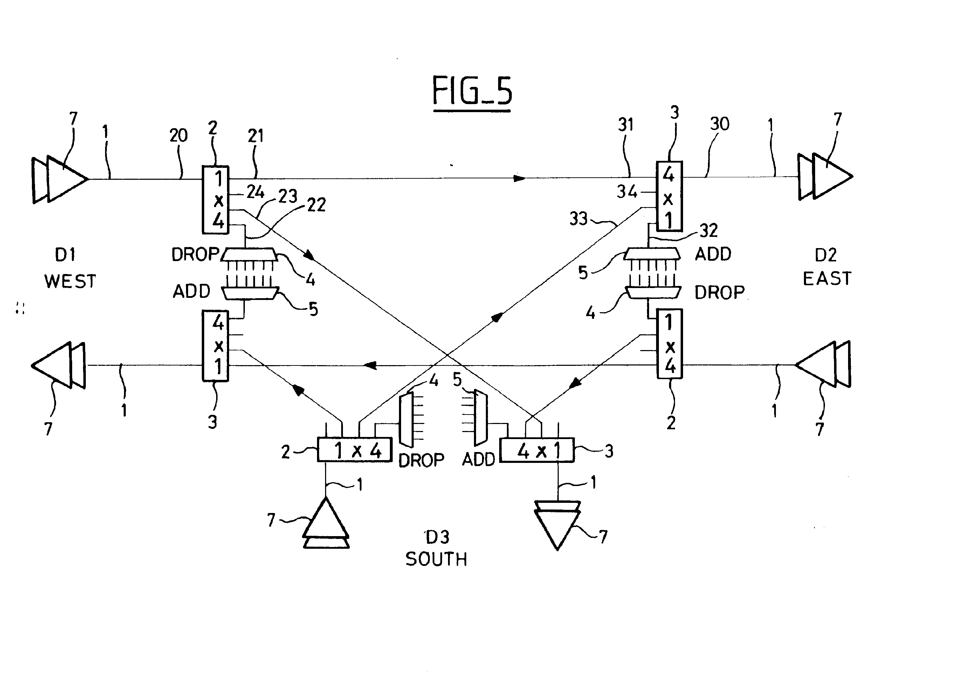

La figure 5 représente schématiquement un exemple de noeud de transmission optique de degré 3 selon l'invention, extensible une fois par le procédé d'extension selon l'invention. La figure 5 correspond aussi à la figure 4 étendue une fois. Le noeud est de degré 3, il relie trois directions D1, D2 et D3 de manière bidirectionnelle entre elles. D'une direction de transmission à l'autre, l'information arrivant d'une direction de transmission, par exemple la direction D1, passe par un amplificateur 7, arrive sur une entrée 20 d'un diviseur optique 2, traverse le diviseur optique 2. Tout ou partie de l'information, selon que le diviseur optique 2 est respectivement un coupleur ou un commutateur en longueur d'onde, est envoyée sur une sortie 22 du diviseur optique 2 puis est extraite par un dispositif d'extraction 4. Tout ou partie de l'information, selon que le diviseur optique 2 est respectivement un coupleur ou un commutateur en longueur d'onde, est envoyée sur une sortie 23 du diviseur optique 2 laquelle sortie 23 a été reliée à une autre direction de transmission, par exemple à la direction D3, par l'intermédiaire d'un combineur optique 3, lors de l'étape de raccordement du procédé d'extension. Tout ou partie de l'information, selon que le diviseur optique 2 est respectivement un coupleur ou un commutateur en longueur d'onde, est envoyée sur une sortie 24 du diviseur optique 2 puis reste bloquée car la sortie 24 est libre en aval, c'est-à-dire non reliée en aval. Tout ou partie de l'information, selon que le diviseur optique 2 est respectivement un coupleur ou un commutateur en longueur d'onde, est envoyée sur une sortie 21 du diviseur optique 2 puis arrive sur une entrée 31 d'un combineur optique 3. De l'information est insérée par un dispositif d'insertion 5 pour arriver sur une entrée 32 du combineur optique 3. De l'information arrive sur l'entrée 33 du combineur optique 3, en provenance d'une autre direction de transmission, par exemple ici de la direction D3, ladite entrée 33 ayant été reliée à la direction D3 par l'intermédiaire d'un diviseur optique 2, lors de l'étape de raccordement du procédé d'extension. Aucune information ne provient de l'entrée 34 du combineur optique 3 laquelle entrée 34 est libre en amont, c'est-à-dire non reliée en amont. Les informations reçues sur les entrées 31, 32, 33 et 34, mais il n'y a pas d'information sur l'entrée 34, du combineur optique 3, sont rassemblées sur la sortie 30 du combineur optique 3. L'information émise sur la sortie 30 du combineur optique 3 passe par un amplificateur 7 pour partir vers une autre direction de transmission, par exemple ici la direction D2.

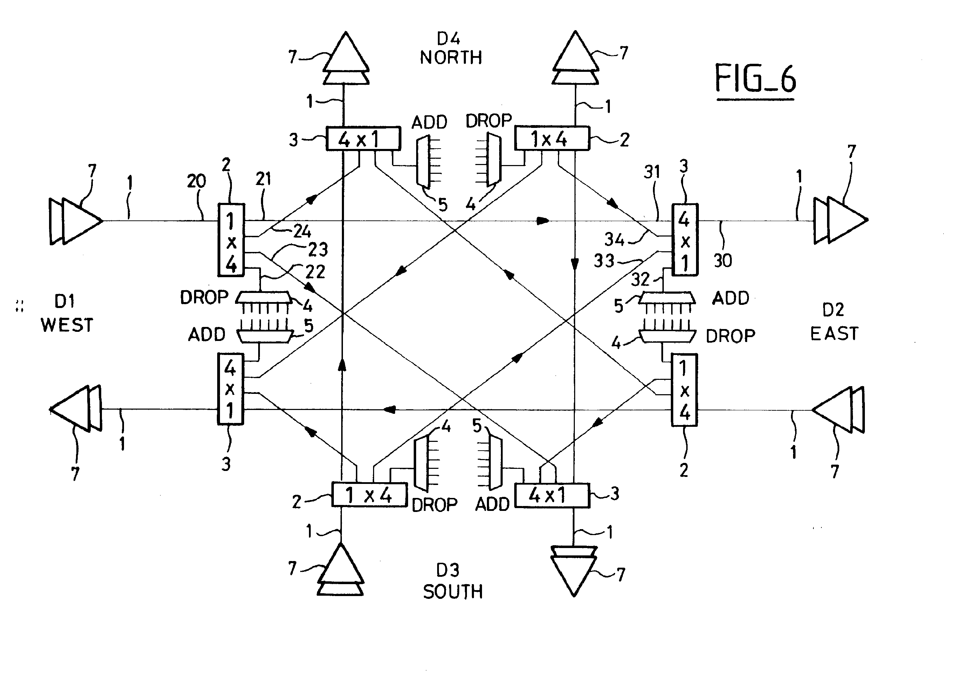

La figure 6 représente schématiquement un exemple de noeud de transmission optique de degré 4, ayant été étendu par le procédé d'extension selon l'invention. La figure 6 correspond aussi à la figure 5 étendue une fois ou encore à la figure 4 étendue deux fois. Le noeud est de degré 4, il relie quatre directions D1, D2, D3 et D4 de manière bidirectionnelle entre elles. D'une direction de transmission à l'autre, l'information arrivant d'une direction de transmission, par exemple D1, passe par un amplificateur 7, arrive sur une entrée 20 d'un diviseur optique 2, traverse le diviseur optique 2. Tout ou partie de l'information, selon que le diviseur optique 2 est respectivement un coupleur ou un commutateur en longueur d'onde, est envoyée sur une sortie 22 du diviseur optique 2 puis est extraite par un dispositif d'extraction 4. Tout ou partie de l'information, selon que le diviseur optique 2 est respectivement un coupleur ou un commutateur en longueur d'onde, est envoyée sur une sortie 23 du diviseur optique 2 laquelle sortie 23 a été reliée à une autre direction de transmission, par exemple à la direction D3, par l'intermédiaire d'un combineur optique 3, lors de l'étape de raccordement du procédé d'extension. Tout ou partie de l'information, selon que le diviseur optique 2 est respectivement un coupleur ou un commutateur en longueur d'onde, est envoyée sur une sortie 24 du diviseur optique 2 laquelle sortie 24 a été reliée à une autre direction de transmission, par exemple à la direction D4, par l'intermédiaire d'un combineur optique 3, lors de l'étape de raccordement du procédé d'extension. Tout ou partie de l'information, selon que le diviseur optique 2 est respectivement un coupleur ou un commutateur en longueur d'onde, est envoyée sur une sortie 21 du diviseur optique 2 puis arrive sur une entrée 31 d'un combineur optique 3. De l'information est insérée par un dispositif d'insertion 5 pour arriver sur une entrée 32 du combineur optique 3. De l'information arrive sur l'entrée 33 du combineur optique 3, en provenance d'une autre direction de transmission, par exemple ici de la direction D3, ladite entrée 33 ayant été reliée à la direction D3 par l'intermédiaire d'un diviseur optique 2, lors de l'étape de raccordement du procédé d'extension. De l'information arrive sur l'entrée 34 du combineur optique 3, en provenance d'une autre direction de transmission, par exemple ici de la direction D4, ladite entrée 34 ayant été reliée à la direction D4 par l'intermédiaire d'un diviseur optique 2, lors de l'étape de raccordement du procédé d'extension. Les informations reçues sur les entrées 31, 32, 33 et 34 du combineur optique 3, sont rassemblées sur la sortie 30 du combineur optique 3. L'information émise sur la sortie 30 du combineur optique 3 passe par un amplificateur 7 pour partir vers une autre direction de transmission, par exemple ici la direction D2.

Sur l'ensemble des figures, lorsqu'une nouvelle direction est reliée au noeud, ce reli peut être effectué sans que la communication entre les directions déjà reliées au noeud soit interrompue.

## Revendications

1. Procédé d'extension d'un réseau extensible de transmission optique en multiplexage en longueur d'onde, lequel réseau comprenant :
- plusieurs directions de transmission (D1 à D4) ;
- au moins un noeud extensible de transmission optique reliant entre elles au moins certaines desdites directions de transmission, et comportant :
- plusieurs lignes de transmission à fibre optique ;
- plusieurs diviseurs optiques (2), un diviseur optique présentant une ligne de transmission à fibre optique en entrée (20) et plusieurs lignes de transmission à fibre optique en sortie (21 à 24) ;
- plusieurs combineurs optiques (3), un combineur optique présentant plusieurs lignes de transmission à fibre optique en entrée (31 à 34) et une ligne de transmission à fibre optique en sortie (30) ;
- au moins l'une des lignes de transmission à fibre optique en sortie (23, 24) d'au moins l'un des diviseurs optiques, présentant une extrémité n'étant reliée en aval ni à une direction de transmission, ni à un éventuel dispositif d'extraction ;
- au moins l'une des lignes de transmission à fibre optique en entrée (33, 34) d'au moins l'un des combineurs optiques, présentant une extrémité n'étant reliée en amont ni à une direction de transmission, ni à un éventuel dispositif d'insertion ;
le procédé d'extension comprenant au moins une étape de raccordement, au niveau dudit noeud ou au moins de l'un desdits noeuds, d'au moins une ligne de transmission à fibre optique en sortie non reliée (23, 24) en aval et d'au moins une ligne de transmission à fibre optique en entrée non reliée (33, 34) en amont, soit à une nouvelle direction de transmission non encore reliée audit noeud, soit respectivement à un éventuel dispositif d'extraction et à un éventuel dispositif d'insertion, non encore reliés audit noeud.

2. Procédé d'extension selon la revendication 1, **caractérisé en ce que** pendant l'étape de raccordement, est ajoutée une nouvelle direction de transmission (D3, d4) non encore reliée audit noeud, à laquelle sont reliées au moins une ligne de transmission à fibre optique en sortie non reliée en aval (23, 24) et au moins une ligne de transmission à fibre optique en entrée non reliée en amont (33, 34), de façon à étendre au moins un noeud de degré N, avec N entier supérieur ou égal à 2, en un noeud de degré N + P, avec P entier supérieur ou égal à 1.

3. Procédé d'extension selon la revendication 2, **caractérisé en ce que** N vaut 2 ou 3.

4. Procédé d'extension selon la revendication 2 ou 3, **caractérisé en ce que** P vaut 1 ou 2.

5. Procédé d'extension selon la revendication 1, **caractérisé en ce que** pendant l'étape de raccordement, sont ajoutés au moins un dispositif d'extraction (4) et au moins un dispositif d'insertion (5), auxquels sont respectivement reliées, au moins une ligne de transmission à fibre optique en sortie non reliée en aval (23, 24) et au moins une ligne de transmission à fibre optique en entrée non reliée en amont (33, 34).

6. Réseau extensible de transmission optique en multiplexage en longueur d'onde, comprenant :
- plusieurs directions de transmission (D1 à D4) ;
- au moins un noeud extensible de transmission optique reliant entre elles au moins certaines desdites directions de transmission, et comportant :
- plusieurs lignes de transmission à fibre optique ;
- plusieurs diviseurs optiques (2), un diviseur optique présentant une ligne de transmission à fibre optique en entrée (20) et plusieurs lignes de transmission à fibre optique en sortie (21 à 24) ;
- plusieurs combineurs optiques (3), un combineur optique présentant plusieurs lignes de transmission à fibre optique en entrée (31 à 34) et une ligne de transmission à fibre optique en sortie (30) ;
**caractérisé en ce que** ledit noeud ou au moins l'un desdits noeuds comprend aussi :
- au moins l'une des lignes de transmission à fibre optique en sortie (23, 24) d'au moins l'un des diviseurs optiques, qui présente une extrémité qui n'est reliée en aval ni à une direction de transmission, ni à un éventuel dispositif d'extraction ;
- au moins l'une des lignes de transmission à fibre optique en entrée (33, 34) d'au moins l'un des combineurs optiques, qui présente une extrémité qui n'est reliée en amont ni à une direction de transmission, ni à un éventuel dispositif d'insertion.

7. Noeud extensible de transmission optique, comportant :
- plusieurs lignes de transmission à fibre optique ;
- plusieurs diviseurs optiques (2), un diviseur optique présentant une ligne de transmission à fibre optique en entrée (20) et plusieurs lignes de transmission à fibre optique en sortie (21 à 24) ;
- plusieurs combineurs optiques (3), un combineur optique présentant plusieurs lignes de transmission à fibre optique en entrée (31 à 34) et une ligne de transmission à fibre optique en sortie (30) ;
**caractérisé en ce que** :
- au moins l'une des lignes de transmission à fibre optique en sortie (23, 24) d'au moins l'un des diviseurs optiques, présente une extrémité libre ;
- au moins l'une des lignes de transmission à fibre optique en entrée (33, 34) d'au moins l'un des combineurs optiques, présente une extrémité libre.

8. Noeud extensible selon la revendication 7, **caractérisé en ce que** le noeud est de degré 2 ou 3.

9. Noeud extensible selon la revendication 7 ou 8, **caractérisé en ce que** le noeud présente :
- plusieurs lignes de transmission à fibre optique en sortie (23 à 24) d'au moins l'un des diviseurs optiques, présentant une extrémité libre ;
- plusieurs lignes de transmission à fibre optique en entrée (33 à 34) d'au moins l'un des combineurs optiques, présentant une extrémité libre.

10. Noeud extensible selon l'une quelconque des revendications 7 à 9, **caractérisé en ce que** le noeud présente :
- plusieurs diviseurs optiques présentant au moins une ligne de transmission à fibre optique en sortie présentant une extrémité libre ;
- plusieurs combineurs optiques présentant au moins une ligne de transmission à fibre optique en entrée présentant une extrémité libre.

11. Noeud extensible selon la revendication 10, **caractérisé en ce que** :
- tous les diviseurs optiques présentent au moins une ligne de transmission à fibre optique en sortie présentant une extrémité libre ;
- tous les combineurs optiques présentent au moins une ligne de transmission à fibre optique en entrée présentant une extrémité libre.

12. Noeud extensible selon l'une quelconque des revendications 7 à 11, **caractérisé en ce que** le noeud est un brasseur optique.

13. Noeud extensible selon l'une quelconque des revendications 7 à 11, **caractérisé en ce que** le noeud est un multiplexeur optique à insertion et à extraction comprenant au moins un dispositif d'insertion (5) et au moins un dispositif d'extraction (4).

14. Noeud extensible selon l'une quelconque des revendications 7 à 13, **caractérisé en ce qu'**au moins l'un des diviseurs optiques est un commutateur en longueur d'onde.

15. Noeud extensible selon l'une quelconque des revendications 7 à 13, **caractérisé en ce qu'**au moins l'un des diviseurs optiques est un coupleur et **en ce qu'**au moins l'une (21) des lignes de transmission à fibre optique en sortie dudit coupleur est reliée à un bloqueur en longueur d'onde (6).

16. Noeud extensible selon l'une quelconque des revendications 7 à 14, **caractérisé en ce qu'**au moins l'un des combineurs optiques est un commutateur en longueur d'onde.

17. Noeud extensible selon l'une quelconque des revendications 7 à 13 ou 15, **caractérisé en ce qu'**au moins l'un des combineurs optiques est un coupleur et **en ce qu'**au moins l'une (31) des lignes de transmission à fibre optique en entrée dudit coupleur est reliée à un bloqueur en longueur d'onde (6).

18. Noeud extensible selon l'une quelconque des revendications 7 à 17, **caractérisé en ce qu'**en amont de chaque diviseur optique est situé un amplificateur (7) et **en ce qu'**en aval de chaque combineur optique est situé un amplificateur (7).

19. Noeud de transmission optique étendu, de degré N avec N entier supérieur ou égal à 3, comportant :
- plusieurs lignes de transmission à fibre optique ;
- N diviseurs optiques (2), un diviseur optique étant un coupleur présentant une ligne de transmission à fibre optique en entrée (20) et plusieurs lignes de transmission à fibre optique en sortie (21 à 24) ;
- N combineurs optiques (3), un combineur optique étant un coupleur présentant plusieurs lignes de transmission à fibre optique en entrée (31 à 34) et une ligne de transmission à fibre optique en sortie (30) ;
**caractérisé en ce que** le noeud comporte aussi :
- N.(N-1) bloqueurs en longueur d'onde (6), chaque bloqueur en longueur d'onde étant situé entre une ligne de transmission à fibre optique en sortie d'un diviseur optique et une ligne de transmission à fibre optique en entrée d'un combineur optique.

20. Procédé d'extension d'un réseau extensible de transmission optique en multiplexage en longueur d'onde, lequel réseau comprenant :
- plusieurs directions de transmission (D1 à D4) ;
- au moins un noeud extensible de transmission optique reliant entre elles au moins certaines desdites directions de transmission, et comportant :
- plusieurs lignes de transmission à fibre optique ;
- plusieurs diviseurs optiques (2), un diviseur optique présentant une ligne de transmission à fibre optique en entrée (20) et plusieurs lignes de transmission à fibre optique en sortie (21 à 24) à capacité spectrale variable et reconfigurable sans interruption de trafic ;
- plusieurs combineurs optiques (3), un combineur optique présentant plusieurs lignes de transmission à fibre optique en entrée (31 à 34) à capacité spectrale variable et reconfigurable sans interruption de trafic et une ligne de transmission à fibre optique en sortie (30) ;
- au moins l'une des lignes de transmission à fibre optique en sortie (23, 24) d'au moins l'un des diviseurs optiques, présentant une extrémité n'étant reliée en aval ni à une direction de transmission, ni à un éventuel dispositif d'extraction ;
- au moins l'une des lignes de transmission à fibre optique en entrée (33, 34) d'au moins l'un des combineurs optiques, présentant une extrémité n'étant reliée en amont ni à une direction de transmission, ni à un éventuel dispositif d'insertion ;
le procédé d'extension comprenant au moins une étape de raccordement, au niveau dudit noeud ou au moins de l'un desdits noeuds, d'au moins une ligne de transmission à fibre optique en sortie non reliée (23, 24) en aval et d'au moins une ligne de transmission à fibre optique en entrée non reliée (33, 34) en amont, soit à une nouvelle direction de transmission non encore reliée audit noeud, soit respectivement à un éventuel dispositif d'extraction et à un éventuel dispositif d'insertion, non encore reliés audit noeud.

21. Réseau extensible de transmission optique en multiplexage en longueur d'onde, comprenant :
- plusieurs directions de transmission (D1 à D4) ;
- au moins un noeud extensible de transmission optique reliant entre elles au moins certaines desdites directions de transmission, et comportant :
- plusieurs lignes de transmission à fibre optique ;
- plusieurs diviseurs optiques (2), un diviseur optique présentant une ligne de transmission à fibre optique en entrée (20) et plusieurs lignes de transmission à fibre optique en sortie (21 à 24) à capacité spectrale variable et reconfigurable sans interruption de trafic ;
- plusieurs combineurs optiques (3), un combineur optique présentant plusieurs lignes de transmission à fibre optique en entrée (31 à 34) à capacité spectrale variable et reconfigurable sans interruption de trafic et une ligne de transmission à fibre optique en sortie (30) ;
**caractérisé en ce que** ledit noeud ou au moins l'un desdits noeuds comprend aussi :
- au moins l'une des lignes de transmission à fibre optique en sortie (23, 24) d'au moins l'un des diviseurs optiques, qui présente une extrémité qui n'est reliée en aval ni à une direction de transmission, ni à un éventuel dispositif d'extraction ;
- au moins l'une des lignes de transmission à fibre optique en entrée (33, 34) d'au moins l'un des combineurs optiques, qui présente une extrémité qui n'est reliée en amont ni à une direction de transmission, ni à un éventuel dispositif d'insertion.

22. Noeud extensible de transmission optique, comportant :
- plusieurs lignes de transmission à fibre optique ;
- plusieurs diviseurs optiques (2), un diviseur optique présentant une ligne de transmission à fibre optique en entrée (20) et plusieurs lignes de transmission à fibre optique en sortie (21 à 24) à capacité spectrale variable et reconfigurable sans interruption de trafic ;
- plusieurs combineurs optiques (3), un combineur optique présentant plusieurs lignes de transmission à fibre optique en entrée (31 à 34) à capacité spectrale variable et reconfigurable sans interruption de trafic et une ligne de transmission à fibre optique en sortie (30) ;
**caractérisé en ce que** :
- au moins l'une des lignes de transmission à fibre optique en sortie (23, 24) d'au moins l'un des diviseurs optiques, présente une extrémité libre ;
- au moins l'une des lignes de transmission à fibre optique en entrée (33, 34) d'au moins l'un des combineurs optiques, présente une extrémité libre.
